(19) Europäisches Patentamt
European Patent Office
Office européen des brevets

(11) **EP 4 501 973 A1**

(12) **EUROPEAN PATENT APPLICATION**
published in accordance with Art. 153(4) EPC

(43) Date of publication:
**05.02.2025 Bulletin 2025/06**

(21) Application number: **23779816.0**

(22) Date of filing: **20.03.2023**

(51) International Patent Classification (IPC):
*C08F 2/44* (2006.01)    *C08F 292/00* (2006.01)
*C08K 3/013* (2018.01)    *C08L 101/00* (2006.01)

(52) Cooperative Patent Classification (CPC):
**C08F 2/44; C08F 292/00; C08K 3/013;**
**C08L 101/00**

(86) International application number:
**PCT/JP2023/010816**

(87) International publication number:
**WO 2023/189800 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.03.2022 JP 2022054931**

(71) Applicant: **Zeon Corporation**
**Tokyo 100-8246 (JP)**

(72) Inventors:
• **CHIBA, Takeru**
**Tokyo 100-8246 (JP)**
• **YAGYU, Sakyo**
**Tokyo 100-8246 (JP)**

(74) Representative: **Kraus & Lederer PartGmbB**
**Thomas-Wimmer-Ring 15**
**80539 München (DE)**

(54) **HOLLOW PARTICLES AND PRODUCTION METHOD THEREFOR**

(57)    To provide hollow particles which are, as a filler for electronic materials, excellent in balance between pressure resistance, dielectric property and thermal expansion coefficient. Hollow particles comprising a shell and a hollow portion surrounded by the shell, wherein a void ratio is 50% or more; wherein a volume average particle diameter is 1.0 um or more and 50.0 um or less; and wherein the shell contains an organic-inorganic composite material containing a resin and inorganic fine particles, and a content of the inorganic fine particles in the shell is 20% by mass or more and 90% by mass or less.

[FIG. 1]

## Description

Technical Field

The disclosure relates to hollow particles comprising a shell of an organic-inorganic composite material and a method for producing the hollow particles.

Background Art

Hollow particles having a hollow in their interior are added and used in resins, coating materials, various kinds of molded bodies and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.

In electronic materials such as an electronic circuit board, there have been attempts to decrease the permittivity and dielectric dissipation factor of resin, such as adding hollow silica particles as a filler (for example, Patent Documents 1 and 2) and adding hollow polymer particles (for example, Patent Document 3).

Patent Document 4 discloses a thermal conductivity modifier in a form of hollow particles, the particles having a shell of an organic-inorganic hybrid vinyl-based resin containing a silicon component. In Patent Document 4, the shell is formed by crosslinking a copolymer of a radically reactive monomer containing an epoxy or oxetane group and a radically reactive monomer containing a silyl group, by a crosslinkable monomer such as a polyamine-based compound. In Patent Document 4, the hollow particles have an average particle diameter of from 10 nm to 150 nm to suppress the whitening of a coating film containing the hollow particles.

Citation List

Patent Documents

Patent Document 1: Japanese Patent Application Laid-Open (JP-A) No. 2012-136363
Patent Document 2: International Publication No. WO2021/172294
Patent Document 3: International Publication No. WO2004/067638
Patent Document 4: JP-A No. 2017-066351

Summary of Invention

Technical Problem

In a metal-clad laminate used in an electronic circuit board such as a copper clad laminate, for the purpose of increasing the dimensional stability of the insulation resin layer, it is desired to decrease and bring the thermal expansion coefficient (or coefficient of thermal expansion, CTE) of the resin layer close to that of the metal plate.

To obtain the effects exerted by hollow particles, such as reduction of permittivity, the hollow particles are desired to have excellent pressure resistance such that the hollow particles can keep a high void ratio even after they are added to various kinds of materials.

However, hollow silica particles have poor pressure resistance and easily collapse, while they have a low CTE; moreover, it is difficult to decrease their relative permittivity and dielectric dissipation factor. The hollow particles having the shell of the organic-inorganic hybrid vinyl-based resin disclosed in Patent Document 4, also have poor pressure resistance and easily collapse; moreover, their dielectric property tends to deteriorate due to the copolymerization with the radically reactive monomer containing a silyl group, and it is difficult to decrease their relative permittivity and dielectric dissipation factor. Meanwhile, the hollow polymer particles have excellent pressure resistance and dielectric property; however, it is difficult to sufficiently decrease their CTE.

Accordingly, there is demand for a filler which have excellent pressure resistance and which can sufficiently decrease the permittivity, dielectric dissipation factor and thermal expansion of a resin material for electronic materials.

An object of the present disclosure is to provide hollow particles which are, as a filler for electronic materials, excellent in balance between pressure resistance, dielectric property and thermal expansion coefficient.

Solution to Problem

The inventors of the present disclosure found that by incorporating a specific amount of inorganic fine particles in the shell of hollow polymer particles, hollow particles which are, as a filler for electronic materials, excellent in balance between pressure resistance, dielectric property and thermal expansion coefficient are obtained.

According to the present disclosure, there are provided hollow particles comprising a shell and a hollow portion surrounded by the shell,

wherein a void ratio is 50% or more;
wherein a volume average particle diameter is 1.0 um or more and 50.0 um or less; and
wherein the shell contains an organic-inorganic composite material containing a resin and inorganic fine particles, and a content of the inorganic fine particles in the shell is 20% by mass or more and 90% by mass or less.

In the hollow particles of the present disclosure, a relative permittivity at a frequency of 1 GHz is preferably 2.00 or less.

In the hollow particles of the present disclosure, a thermal expansion coefficient at 23°C to 100°C is preferably 10 ppm/°C or more and 50 ppm/°C or less.

In the hollow particles of the present disclosure, a relative permittivity of the inorganic fine particles at a frequency of 1 GHz is preferably 5.0 or less, and a thermal expansion coefficient of the inorganic fine particles at 23°C to 100°C is preferably -5.0 ppm/°C or more and 10 ppm/°C or less.

In the hollow particles of the present disclosure, the inorganic fine particles are preferably silica fine particles.

In the hollow particles of the present disclosure, the inorganic fine particles are preferably surface-treated with a surface treatment agent containing a radically reactive functional group.

In the hollow particles of the present disclosure, a ratio of a volume average primary particle diameter of the inorganic fine particles to a shell thickness is preferably 0.90 or less.

According to the present disclosure, there is provided a method for producing the hollow particles of the present disclosure,
the method comprising:

preparing a mixture liquid containing a polymerizable monomer, inorganic fine particles, a hydrophobic solvent, a polymerization initiator, a dispersion stabilizer and an aqueous medium,
suspending the mixture liquid to prepare a suspension in which droplets of a monomer composition containing the polymerizable monomer, the inorganic fine particles, the hydrophobic solvent and the polymerization initiator are dispersed in the aqueous medium,
subjecting the suspension to a polymerization reaction to form precursor particles comprising a shell which contains a polymer of the polymerizable monomer and the inorganic fine particles and a hollow portion which is surrounded by the shell and including the hydrophobic solvent in the hollow portion, thereby obtaining a precursor composition in which the precursor particles are dispersed in the aqueous medium, and
removing the included hydrophobic solvent from the precursor particles.

Advantageous Effects of Invention

As described above, the present disclosure provides hollow particles suitable as a filler for electronic materials, which have excellent pressure resistance and which can decrease the permittivity, dielectric dissipation factor and thermal expansion of a resin material.

Brief Description of Drawings

[FIG. 1] A schematic view of an exemplary cross-section of the hollow particles of the present disclosure.
[FIG. 2] A diagram illustrating an example of the method for producing the hollow particles of the present disclosure.

Description of Embodiments

The hollow particles of the present disclosure are hollow particles comprising a shell and a hollow portion surrounded by the shell,

wherein a void ratio is 50% or more;

wherein a volume average particle diameter is 1.0 um or more and 50.0 μm or less; and

wherein the shell contains an organic-inorganic composite material containing a resin and inorganic fine particles, and a content of the inorganic fine particles in the shell is 20% by mass or more and 90% by mass or less.

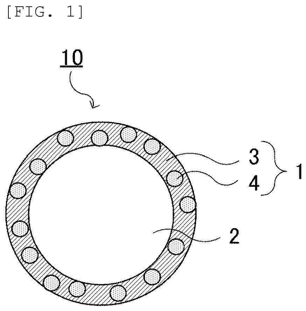

FIG. 1 is a schematic view of an exemplary cross-section of the hollow particles of the present disclosure. A hollow particle 10 shown in FIG. 1 comprises a shell 1 and a hollow portion 2 surrounded by the shell 1, and the shell 1 contains a resin 3 and an inorganic fine particle 4. In the hollow particles of the present disclosure, as shown in FIG. 1, the resin 3 forms the framework of the shell 1, and the resin 3 serves as a binder to retain the inorganic fine particle 4 in the shell.

FIG. 1 is merely a schematic view for description, and the hollow particles of the present disclosure are not limited to the hollow particles shown FIG. 1. Further, the structures, dimensions and shapes of the hollow particles of the present disclosure and those of various materials contained in the hollow particles are not limited to the structures, dimensions and shapes shown in the view.

In the hollow particles of the present disclosure, the resin contained in the shell is typically a polymer. A polymer is a material which is excellent in strength and which is relatively low in relative permittivity and dielectric dissipation factor; however, it is high in CTE. Accordingly, hollow polymer particles in which the shell is made of a polymer is high in CTE, while having excellent pressure resistance and dielectric property. Meanwhile, an inorganic component such as silica is poor in strength and dielectric property; however, it is low in CTE. Also, hollow particles have the following tendency: as the particle diameter increases, the shell thickness increases, resulting in an increase in pressure resistance; moreover, as the void ratio increases, the proportion of an air layer in the particles increases, resulting in an increase in dielectric property.

The hollow particles of the present disclosure comprises the shell of the organic-inorganic composite material in which a specific amount of inorganic fine particles are contained in the polymer, and the hollow particles have the above-described void ratio and particle diameter. Accordingly, such hollow particles are achieved, that while they have excellent pressure resistance and dielectric property, their CTE is low. Also, it is presumed that the hollow particles of the present disclosure have excellent dielectric property since the inorganic fine particles have a three-dimensional crystal structure. It is presumed that, compared to the case of forming the shell by copolymerizing a monomer containing an inorganic component in a polymer as described in Patent Document 4, in the case of incorporating the inorganic fine particles having the three-dimensional crystal structure in the shell, the molecular motion of the shell is suppressed and results in a decrease in dielectric dissipation factor, thereby improving the dielectric property of the hollow particles.

In the present disclosure, "excellent in dielectric property" means that the relative permittivity and the dielectric dissipation factor are low. It is considered that as the relative permittivity and the dielectric dissipation factor decreases, the dielectric property improves.

Hereinafter, an example of the method for producing the hollow particle of the present disclosure will be described. Then, the hollow particles of the present disclosure will be described in detail.

In the present disclosure, "to" which shows a numerical range is used to describe a range in which the numerical values described before and after "to" indicate the lower limit value and the upper limit value.

I. Method for producing the hollow particles

The hollow particles of the present disclosure can be obtained by, for example, the method for producing the hollow particles according to the present disclosure,
the method comprising:

preparing a mixture liquid containing a polymerizable monomer, inorganic fine particles, a hydrophobic solvent, a polymerization initiator, a dispersion stabilizer and an aqueous medium,
suspending the mixture liquid to prepare a suspension in which droplets of a monomer composition containing the polymerizable monomer, the inorganic fine particles, the hydrophobic solvent and the polymerization initiator are dispersed in the aqueous medium, and
subjecting the suspension to a polymerization reaction to form precursor particles comprising a shell which contains a polymer of the polymerizable monomer and the inorganic fine particles and a hollow portion which is surrounded by the shell and including the hydrophobic solvent in the hollow portion, thereby obtaining a precursor composition in which the precursor particles are dispersed in the aqueous medium.

The production method of the present disclosure follows a basic technique for forming hollow particles by the suspension polymerization method. In the suspension polymerization method, by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. Then, by subjecting the suspension to a polymerization reaction, a polymer starts to precipitate on the surface of the droplets, and the polymerization reaction is further developed. Accordingly, the surface of the droplets is cured to form the shell, thereby obtaining the hollow particles having the hollow portion filled with the hydrophobic solvent. In the present disclosure, the inorganic fine particles are further added to the mixture liquid. By selecting suitable inorganic fine particles according to the type of the polymerizable monomer, the inorganic fine particles and the polymerizable monomer can be distributed on the surface side of the droplets in the suspension. By subjecting the suspension to a polymerization reaction, the inorganic fine particles are retained in the shell that is formed by the polymer.

The method for producing the hollow particles of the present disclosure includes the steps of preparing the mixture liquid, preparing the suspension, and subjecting the suspension to a polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles of the present disclosure may be the first production method including the following steps.

(1) Mixture liquid preparation step

The mixture liquid preparation step includes preparing a mixture liquid containing a polymerizable monomer, inorganic fine particles, a hydrophobic solvent, a polymerization initiator, a dispersion stabilizer and an aqueous medium.

(2) Suspension step

The suspension step includes suspending the mixture liquid to prepare a suspension in which droplets of a monomer composition containing the polymerizable monomer, the inorganic fine particles, the hydrophobic solvent and the polymerization initiator are dispersed in the aqueous medium.

(3) Polymerization step

The polymerization step includes subjecting the suspension to a polymerization reaction to form precursor particles comprising a shell which contains a polymer of the polymerizable monomer and the inorganic fine particles and a hollow portion which is surrounded by the shell and including the hydrophobic solvent in the hollow portion, thereby obtaining a precursor composition in which the precursor particles are dispersed in the aqueous medium.

(4) Solid-liquid separation step

The solid-liquid separation step includes performing solid-liquid separation of the precursor composition to obtain the precursor particles including the hydrophobic solvent in the hollow portion.

(5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

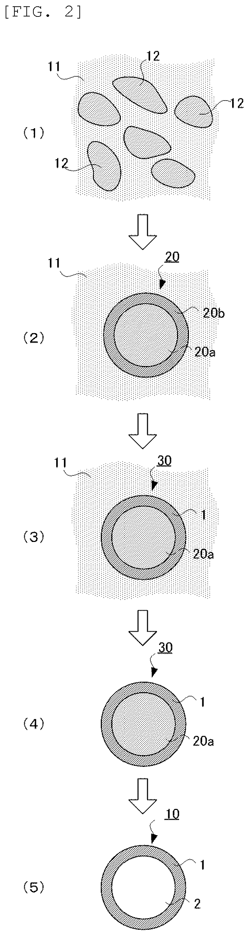

FIG. 2 is a schematic diagram showing an example of the first production method of the present disclosure. The diagrams (1) to (5) in FIG. 2 correspond to the steps (1) to (5) described above, respectively. White arrows between the diagrams indicate the order of the steps. FIG. 2 is merely a schematic diagram for description, and the production method of the present disclosure is not limited to the method shown in FIG. 2. Further, the structures, dimensions and shapes of materials used for the production method of the present disclosure are not limited to the structures, dimensions and shapes of various materials shown in these diagrams.

The diagram (1) of FIG. 2 is a schematic cross-sectional view showing an embodiment of the mixture liquid in the mixture liquid preparation step. As shown in the diagram, the mixture liquid contains an aqueous medium 11 and a low polarity material 12 dispersed in the aqueous medium 11. Here, the low polarity material 12 means a material that has low polarity and is less likely to mix with the aqueous medium 11. In the present disclosure, the low polarity material 12 contains the polymerizable monomer, the inorganic fine particles, the hydrophobic solvent and the polymerization initiator.

The diagram (2) of FIG. 2 is a schematic cross-sectional view showing an embodiment of the suspension in the suspension step. The suspension contains the aqueous medium 11 and droplets 20 of the monomer composition dispersed in the aqueous medium 11. The droplets 20 of the monomer composition contain the polymerizable monomer, the inorganic fine particles, the hydrophobic solvent and the polymerization initiator, and their distribution in the droplets is not uniform. The droplets 20 of the monomer composition have the following structure: phase separation occurs between a hydrophobic solvent 20a and a material 20b containing the polymerizable monomer and the inorganic fine particles and not containing the hydrophobic solvent; the hydrophobic solvent 20a is distributed in the center; the material 20b not containing the hydrophobic solvent is distributed on the surface side; and the dispersion stabilizer (not shown) is on the surface.

The diagram (3) of FIG. 2 is a schematic cross-sectional view showing an embodiment of the precursor composition obtained by the polymerization step, which contains the precursor particles which include the hydrophobic solvent in the hollow portion. The precursor composition contains the aqueous medium 11 and precursor particles 30 which include the hydrophobic solvent 20a in the hollow portion and which are dispersed in the aqueous medium 11. A shell 1 forming the outer surface of the precursor particles 30 is formed by polymerization of the polymerizable monomer contained in the droplets 20 of the monomer composition. The shell 1 contains the polymer of the polymerizable monomer and the inorganic fine particles.

The diagram (4) of FIG. 2 is a schematic cross-sectional view showing an embodiment of the precursor particles after the solid-liquid separation step. The diagram (4) of FIG. 2 shows a state where the aqueous medium 11 has been removed from the state shown in the diagram (3) of FIG. 2.

The diagram (5) of FIG. 2 is a schematic cross-sectional view showing an embodiment of the hollow particles after the solvent removal step. The diagram (5) of FIG. 2 shows a state where the hydrophobic solvent 20a has been removed from the state shown in the diagram (4) of FIG. 2. By the removal of the hydrophobic solvent from the precursor particles, hollow particles 10 having a gas-filled hollow portion 2 in the interior of the shell 1, are obtained.

As another preferred example of the method for producing the hollow particles of the present disclosure, the following second production method is provided: the mixture liquid preparation step to the polymerization step are carried out in the same manner as the first production method; after the polymerization step, the solvent removal step is carried out without the solid-liquid separation step; and the solid-liquid separation step is carried out after the solvent removal step. In the second production method, the hollow particles in which the hollow portion is filled with gas, are obtained as follows: after the polymerization step, the solvent removal step is carried out for removal of the hydrophobic solvent from the precursor particles in the precursor composition in a slurry form to obtain a suspension in which the hollow particles are dispersed in the aqueous medium; moreover, the aqueous dispersion is subjected to the solid-liquid separation step, thereby obtaining the hollow particles in which the hollow portion is filled with gas.

Hereinbelow, the five steps described above and other steps are described in order.

(1) Mixture liquid preparation step

The mixture liquid preparation step includes preparing a mixture liquid containing a polymerizable monomer, inorganic fine particles, a hydrophobic solvent, a polymerization initiator, a dispersion stabilizer and an aqueous medium. The mixture liquid may further contain other materials to the extent that does not impair the effects of the present disclosure.

The materials for the mixture liquid will be described in the following order: (A) the polymerizable monomer, (B) the inorganic fine particles, (C) the hydrophobic solvent, (D) the polymerization initiator, (E) the dispersion stabilizer and (F) the aqueous medium.

(A) polymerizable monomer

In the present disclosure, the polymerizable monomer is a compound containing an addition-polymerizable functional group (in the present disclosure, it may be simply referred to as "polymerizable functional group"). In the present disclosure, as the polymerizable monomer, a compound containing an ethylenically unsaturated bond as the addition-polymerizable functional group, is generally used.

In the present disclosure, a known polymerizable monomer conventionally used for the production of hollow polymer particles can be used as the polymerizable monomer, without particular limitation. The polymerizable monomer preferably contains a crosslinkable monomer, and it may further contain a non-crosslinkable monomer. When the polymerizable monomer contains a crosslinkable monomer, in the polymerization reaction of the suspension, the crosslinking density of the polymer precipitated on the surface of the droplets increases, and the precipitates are crosslinked. Accordingly, the crosslinking density of the shell can be improved; the shell excellent in strength is easily formed; the thus-obtained hollow particles easily become spherical; and the hollow portion that is clearly distinguished from the shell is easily formed in the interior of the particles.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

Also in the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer". Also in the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer". In the crosslinkable acrylic monomer, at least one polymerizable functional group is only required to be a (meth)acryloyl group, and all polymerizable functional groups are preferably (meth)acryloyl groups.

Also in the present disclosure, (meth)acrylate means each of acrylate and methacrylate; (meth)acryl means each of acryl and methacryl; and (meth)acryloyl means each of acryloyl and methacryloyl.

As the crosslinkable monomer, examples include, but are not limited to, the following:

a difunctional crosslinkable hydrocarbon monomer such as an aromatic divinyl monomer (e.g., divinylbenzene, divinylbiphenyl and divinylnaphthalene), a diene monomer (e.g., butadiene, isoprene, 2,3-dimethylbutadiene, pentadiene and hexadiene) and an alicyclic olefin (e.g., dicyclopentadiene, cyclopentadiene and ethylidene tetracyclododecene;

a polymer type crosslinkable hydrocarbon monomer such as polybutadiene, polyisoprene, SBS (a block copolymer of styrene and butadiene) and SIS (a block copolymer of styrene and isoprene);

a difunctional crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate, tricyclodecane dimethanol di(meth)acrylate, 2-hydroxy-3-(meth)acryloyloxypropyl (meth)acrylate and both-(meth)acrylic-terminated polyphenylene ether;

a trifunctional or higher-functional crosslinkable acrylic monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof;

a crosslinkable allyl monomer such as diallyl phthalate; and

a polymer-type crosslinkable monomer such as both-vinyl-terminated polyphenylene ether.

These crosslinkable monomers may be used alone or in combination of two or more.

As the non-crosslinkable monomer, examples include, but are not limited to, an aromatic monovinyl monomer such as styrene, vinyl toluene, $\alpha$-methylstyrene, p-methylstyrene, ethylvinylbenzene, ethylvinylbiphenyl and ethylvinylnaphthalene; a monoolefin monomer such as ethylene, propylene and butylene; an alicyclic monoolefin such as vinylcyclohexane, norbornene and tricyclododecene; a non-crosslinkable acrylic monomer such as methyl (meth)acrylate, ethyl (meth)acrylate, butyl (meth)acrylate, 2-ethylhexyl (meth)acrylate, lauryl (meth)acrylate), t-butylaminoethyl (meth)acrylate, glycidyl (meth)acrylate, 2-hydroxyethyl (meth)acrylate, 2-aminoethyl (meth)acrylate, (meth)acrylic acid, (meth)acrylamide, N-methylol (meth)acrylamide, N-butoxymethyl (meth)acrylamide, methoxypolyethylene glycol (meth)acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate; a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a vinylpyridine monomer. Also, a non-crosslinkable macromer such as (meth)acrylic-terminated polystyrene and (meth)acrylic-terminated polymethyl methacrylate may be used, for example. These non-crosslinkable monomers may be used alone or in combination of two or more.

In 100 parts by mass of the polymerizable monomer, the content of the crosslinkable monomer is preferably 70 parts by mass or more, more preferably 80 parts by mass or more, and still more preferably 90 parts by mass or more. When the content of the crosslinkable monomer is equal to or more than the lower limit value, phase separation is likely to occur between the shell-forming component and the hydrophobic solvent in the monomer composition droplets dispersed in the suspension, and the shell with excellent strength is formed. Accordingly, the deformation of the shell is suppressed and, as a result, the hollow particles having only one hollow portion that is clearly distinguished from the shell in the interior thereof, are easily formed. In addition, the shell with high crosslinking density is formed, and the inorganic fine particles are easily retained in the shell, accordingly.

The polymerizable monomer may contain the non-crosslinkable monomer to the extent that does not impair the effects of the present disclosure. When the polymerizable monomer contains the crosslinkable monomer in combination with the non-crosslinkable monomer, the strength of the shell may be improved. When the polymerizable monomer contains the crosslinkable monomer and the non-crosslinkable monomer, in 100 parts by mass of the polymerizable monomer, the content of the crosslinkable monomer may be 98 parts by mass or less, or it may be 96 parts by mass or less, for example.

From the viewpoint of improving the pressure resistance of the hollow particles, the polymerizable monomer preferably contains at least a difunctional crosslinkable monomer as the crosslinkable monomer. When the polymerizable monomer contains a difunctional crosslinkable monomer in combination with a trifunctional or higher-functional crosslinkable monomer, the pressure resistance may be further improved.

When the polymerizable monomer contains the difunctional crosslinkable monomer and the trifunctional or higher-functional crosslinkable monomer, in 100 parts by mass of the crosslinkable monomers, the content of the trifunctional or higher-functional crosslinkable monomer is preferably 5 parts by mass or more, more preferably 10 parts by mass or more, and still more preferably 20 parts by mass or more. On the other hand, it is preferably 50 parts by mass or less, and more preferably 40 parts by mass or less.

From the point of view that the polymerization reaction is easily stabilized, the polymerizable monomer is preferably a polymerizable monomer in which the polymerizable functional group is a (meth)acryloyl group or a vinyl group. In the present disclosure, "the polymerization reaction is stabilized" means that the reactivity of the polymerization reaction is excellent, and the polymerization reaction uniformly proceeds. In the present disclosure, in 100 parts by mass of the polymerizable monomer, the content of the polymerizable monomer in which the polymerizable functional group is a (meth)acryloyl group or a vinyl group, is preferably 80 parts by mass or more, more preferably 90 parts by mass or more, and still more preferably 95 parts by mass or more.

The polymerizable monomer preferably contains a hydrocarbon monomer, since the dielectric property of the hollow particles is easily improved when the polymerizable monomer contains a hydrocarbon monomer. From the viewpoint of improving the dielectric property of the hollow particles, in 100 parts by mass of the polymerizable monomer, the content of the hydrocarbon monomer is preferably 30 parts by mass or more, more preferably 50 parts by mass or more, still more preferably 70 parts by mass or more, and even more preferably 90 parts by mass or more.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is, as the lower limit thereof, preferably 5% by mass or more, and more preferably 10% by mass or more. The content is, as the upper limit thereof, preferably 50% by mass or less, and more preferably 40% by mass or less.

From the viewpoint of improving the mechanical strength of the hollow particles, the content of the polymerizable monomer is preferably 10% by mass or more, more preferably 15% by mass or more, and still more preferably 20% by mass or more, with respect to the total mass (100% by mass) of a solid component obtained by excluding the hydrophobic solvent from the material for the oil phase in the mixture liquid. From the point of view that the inorganic fine particles are sufficiently contained, the content of the polymerizable monomer is preferably 80% by mass or less, more preferably 70% by mass or less, and still more preferably 60% by mass or less.

In the present disclosure, the solid component includes all components excluding solvent, and a liquid polymerizable monomer and the like are included in the solid component.

(B) Inorganic fine particles

As the inorganic fine particles, from the viewpoint of obtaining the hollow particles excellent in balance between dielectric property and CTE, preferred are inorganic fine particles having a relative permittivity at a frequency of 1 GHz of 5.0 or less and a thermal expansion coefficient at 23°C to 100°C of -5.0 ppm/°C or more and 10 ppm/°C or less.

The relative permittivity of the inorganic fine particles at a frequency of 1 GHz is more preferably 4.5 or less, still more preferably 4.0 or less, and even more preferably 3.0 or less. The lower limit of the relative permittivity of the inorganic fine particles is not particularly limited, and it is generally 1.0 or more.

The thermal expansion coefficient of the inorganic fine particles at 23°C to 100°C is more preferably 7.5 ppm/°C or less, still more preferably 5.0 ppm/°C or less, and even more preferably 1.0 ppm/°C or less. The lower limit of the thermal expansion coefficient of the inorganic fine particles is not particularly limited, and it may be -2.5 ppm/°C or more, for example.

From the viewpoint of obtaining the hollow particles excellent in dielectric property, the dielectric dissipation factor of the inorganic fine particles at a frequency of 1 GHz is preferably $1.0 \times 10^{-2}$ or less, and more preferably $8.0 \times 10^{-3}$ or less. The lower limit of the dielectric dissipation factor of the inorganic fine particles is not particularly limited, and it is generally $1.0 \times 10^{-4}$ or more.

As the main component of the inorganic fine particles preferably used in the present disclosure, examples include, but are not limited to, an oxide or nitride of at least one kind of element selected from the group consisting of Group 2A and 3B elements in the second to seventh rows of the periodic table and Group 4B, 5B and 6B elements in the third to seventh rows of the periodic table. The main component of the inorganic fine particles is a component which is contained in an amount of 50% by mass or more in the inorganic fine particles. In addition to the main component, the inorganic fine particles may contain a component derived from the surface treatment agent, for example.

In the present disclosure, from the viewpoint of suppressing a deterioration of the dielectric property of the hollow particles and reducing the CTE thereof, inorganic fine particles whose main component is at least one selected from the group consisting of silicon dioxide, zinc oxide and boron nitride is preferably used. They are preferred since they generally satisfy the above-described preferred relative permittivity, dielectric dissipation factor and thermal expansion coefficient. As the inorganic fine particles, silica fine particles whose main component is silicon dioxide are particularly preferred.

Also, the inorganic fine particles used in the present disclosure are preferably surface-treated with the surface treatment agent containing a radically reactive functional group. By using the surface-treated inorganic fine particles, the inorganic fine particles can be easily retained in the shell. The reason is presumed as follows: since the surface-treated inorganic fine particles have good affinity for the polymerizable monomer, the inorganic fine particles and the polymerizable monomer can be easily distributed on the surface side of the droplets in the suspension; moreover, when polymerizing the polymerizable monomer, the radically reactive functional group on the surface of the inorganic fine particles reacts with the polymerizable functional group of the polymerizable monomer, thereby binding the inorganic fine particles to the polymer via covalent bonds.

Also, when the inorganic fine particles used in the present disclosure are surface-treated with the surface treatment agent containing a radically reactive functional group, the pressure resistance of the hollow particles of the present disclosure tends to improve. This is presumed to be because the inorganic fine particles are bound to the polymer via covalent bonds in the shell of the hollow particles, thereby increasing the shell strength.

The surface treatment agent containing a radically reactive functional group is not particularly limited. For example, a silane coupling agent containing a radically reactive functional group is preferably used, such as a vinyl silane coupling agent, a methacrylic silane coupling agent, an acrylic silane coupling agent and a styryl silane coupling agent.

Also, the inorganic fine particles used in the present disclosure may be surface-treated with a surface treatment agent not containing a radically reactive functional group. The surface treatment agent not containing a radically reactive functional group is not particularly limited, and a known silane coupling agent may be used. From the viewpoint of good affinity between the inorganic fine particles and the polymerizable monomer, a silane coupling agent containing a hydrocarbon group is preferred. As such a preferred silane coupling agent, examples include, but are not limited to, methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, n-butyltrimethoxysilane, isobutyltrimethoxysilane, trimethylmethoxysilane, triethylmethoxysilane, trimethylethoxysilane, triethylethoxysilane, n-hexyltrimethoxysilane, n-octyltrimethoxysilane, n-octyltriethoxysilane, n-decyltrimethoxysilane, n-hexadecyltrimethoxysilane, and n-octadecyltrimethoxysilane. Of them, a trialkylalkoxysilane such as trimethylmethoxysilane, triethylmethoxysilane, trimethylethoxysilane and triethylethoxysilane is preferred.

The inorganic fine particles are preferably selected so that the ratio of the volume average primary particle diameter of the inorganic fine particles to the shell thickness of the hollow particles (the volume average primary particle diameter of the inorganic fine particles/the shell thickness) is 0.90 or less. Accordingly, the inorganic fine particles can be easily retained in the shell, and the surface smoothness of the shell can be improved. When the surface smoothness of the shell is improved, uniform external pressure can be easily applied, and the pressure resistance of the hollow particles tends to improve, accordingly. In the case where the particle diameter of the inorganic fine particles is too large with respect to the shell thickness, the pressure resistance of the hollow particles may deteriorate, because cracking is likely to occur in the portions where the inorganic fine particles are present, when external pressure is applied. By decreasing the ratio, such cracking can be suppressed, and the pressure resistance can be improved.

The ratio of the volume average primary particle diameter of the inorganic fine particles to the shell thickness of the hollow particles is more preferably 0.50 or less, still more preferably 0.30 or less, and even more preferably 0.20 or less. The lower limit of the ratio is not particularly limited. For example, it may be 0.001 or more, or it may be 0.01 or more.

The volume average primary particle diameter of the inorganic fine particles may be 5 nm or more and 3000 nm or less, for example. It is preferably 10 nm or more and 2000 nm or less, more preferably 15 nm or more and 1000 nm or less, and still more preferably 15 nm or more and 500 nm or less. The volume average primary particle diameter of the inorganic fine particles is preferably equal to or more than the lower limit value, since the dispersibility of the inorganic fine particles in the mixture liquid easily becomes excellent. When the volume average primary particle diameter of the inorganic fine particles is equal to or less than the upper limit value, the inorganic fine particles can be uniformly contained in the shell, even though the shell is sufficiently thin. Accordingly, the hollow particles which are excellent in balance between the dielectric property and the thermal expansion coefficient can be easily obtained.

The volume average primary particle diameter of the inorganic fine particles can be obtained by measuring the primary particle diameter of 100 particles by image analysis of an image taken by SEM observation, and calculating the volume average of the measured primary particle diameters.

From the viewpoint of obtaining the hollow particles with a low CTE, with respect to the total mass (100% by mass) of a solid component obtained by excluding the hydrophobic solvent from the material for the oil phase in the mixture liquid, the content of the inorganic fine particles in the mixture liquid is preferably 20% by mass or more, more preferably 30% by mass or more, and still more preferably 40% by mass or more. On the other hand, from the viewpoint of suppressing a deterioration in the pressure resistance and the dielectric property, the content of the inorganic fine particles is preferably 90% by mass or less, more preferably 85% by mass or less, still more preferably 80% by mass or less, even more preferably 70% by mass or less, and particularly preferably 60% by mass or less.

(C) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferably used.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane, 2-methylpentane and a paraffin-based solvent, and a cyclic hydrocarbon solvent such as cyclohexane, methylcyclohexane and cycloheptane.

These hydrophobic solvents may be used alone or in combination of two or more.

From the point of view that phase separation easily occurs between the polymerizable monomer and hydrophobic solvent in the droplets of the monomer composition during the suspension step, such an organic solvent is preferably selected as the hydrophobic solvent, that the water solubility of the organic solvent is smaller than that of the crosslinkable monomer contained in the polymerizable monomer.

When the polymerizable monomer contains the hydrocarbon monomer in an amount of more than 50% by mass, a chain hydrocarbon solvent is preferably used as the hydrophobic solvent; a chain hydrocarbon solvent containing 5 to 8 carbon atoms is more preferably used as the hydrophobic solvent; and at least one kind selected from the group consisting of pentane, hexane, heptane and octane is still more preferably used as the hydrophobic solvent.

When the polymerizable monomer contains the acrylic monomer, and the amount of the hydrocarbon monomer is 50% by mass or less, a hydrocarbon solvent containing 4 to 7 carbon atoms is preferably used as the hydrophobic solvent, and a hydrocarbon solvent containing 5 to 7 carbon atoms is more preferably used as the hydrophobic solvent. The hydrocarbon solvent may be an aromatic or aliphatic hydrocarbon, and it is preferably an aliphatic hydrocarbon, more preferably a cyclic hydrocarbon solvent, and still more preferably at least one selected from the group consisting of cyclohexane, cycloheptane and methylcyclohexane.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.5 or less, and more preferably 2.0 or less. The relative permittivity is one of the indices of the level of the polarity of a compound. In the case where the relative permittivity of the hydrophobic solvent is 2.5 or less and sufficiently small, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to the total mass (100 parts by mass) of the polymerizable monomer and the inorganic fine particles, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. The content of the hydrophobic solvent in the mixture liquid is more preferably 70 parts by mass or more and 300 parts by mass or less, and still more preferably 80 parts by mass or more and 200 parts by mass or less, with respect to the total mass (100 parts by mass) of the polymerizable monomer and the inorganic fine particles.

(D) Polymerization initiator

In the production method of the present disclosure, the mixture liquid preferably contains an oil-soluble polymerization initiator as the polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile) .

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the oil-soluble polymerization initiator is less likely to remain after the end of the polymerization reaction, and an unexpected side reaction is less likely to progress.

(E) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer, and a surfactant. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

As the inorganic dispersion stabilizer, a sparingly water-soluble inorganic dispersion stabilizer is preferably used.

As used herein, "sparingly water-soluble" is preferably such that the solubility in 100 g of water is 0.5 g or less.

As the inorganic dispersion stabilizer, a metal hydroxide is preferred, and magnesium hydroxide is more preferred.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (e.g., polyacrylic acid), a cellulose (e.g., hydroxyethyl cellulose, carboxymethyl cellulose, methyl cellulose, ethyl cellulose), polyvinylpyrrolidone, polyacrylimide, polyethylene oxide and a poly(hydroxystearic acid-g-methyl methacrylate-co-methacrylic acid) copolymer.

As an inorganic water-soluble high-molecular-weight compound, examples include, but are not limited to, sodium tripolyphosphate.

The surfactant is a compound containing both a hydrophilic group and a hydrophobic group per molecule. As the surfactant, examples include, but are not limited to, a known ionic surfactant such as an anionic surfactant, a cationic surfactant and an ampholytic surfactant, and a known nonionic surfactant.

The content of the dispersion stabilizer is not particularly limited. With respect to the total mass (100 parts by mass) of the polymerizable monomer, the inorganic fine particles and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

(F) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to the total mass (100 parts by mass) of the polymerizable monomer and inorganic fine particles contained in the mixture liquid, the content of the aqueous medium is, as the lower limit thereof, preferably 200 parts by mass or more, more preferably 400 parts by mass or more, and still more preferably 600 parts by mass or more. The content is, as the upper limit thereof, preferably 1000 parts by mass or less, and more preferably 800 parts by mass or less.

The mixture liquid may further contain other materials that are different from the above-mentioned materials (A) to (F), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the inorganic fine particles, (C) hydrophobic solvent and (D) the polymerization initiator is dispersed with a size of a particle diameter of approximately several millimeters in an aqueous phase containing (E) the dispersion stabilizer, (F) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the inorganic fine particles, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the above-described mixture liquid to prepare a suspension in which droplets of a monomer composition containing the polymerizable monomer, the inorganic fine particles, the hydrophobic solvent and the polymerization initiator are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal or vertical in-line disperser such as MILDER (product name, manufactured by Pacific Machinery & Engineering Co., Ltd.), CAVITRON (product name, manufactured by EUROTEC, Ltd.) and an in-line disperser manufactured by IKA (e.g., DISPAX-REACTOR (registered trademark) DRS (product name)), and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 1 um to 50 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the lipophilic monomer composition and the dispersion stabilizer surrounding the periphery of the lipophilic monomer composition. The droplets of the monomer composition contain the oil-soluble polymerization initiator, the polymerizable monomer, the inorganic fine particles and the hydrophobic solvent.

The droplets of the monomer composition are minute oil droplets, and the polymerization initiator generates polymerization initiating radicals in the interior of the minute oil droplets. Therefore, the precursor particles having a target particle diameter can be produced without an excessive growth of the minute oil droplets. In the suspension polymerization method using the oil-soluble polymerization initiator, there is no opportunity for the polymerization initiator to come into contact with the polymerizable monomer dispersed in the aqueous medium; therefore, the subgeneration of surplus resin particles (e.g., solid particles having a relatively small particle diameter) in addition to the target resin particles having the hollow portion, can be suppressed.

(3) Polymerization step

The polymerization step includes subjecting the suspension to a polymerization reaction to form precursor particles, thereby obtaining a precursor composition in which the precursor particles are dispersed in the aqueous medium. In the polymerization step, the polymerization reaction of the polymerizable monomer contained in the droplets of the monomer composition is developed to make the polymerizable monomer into a polymer, thereby forming the shell containing the polymer and the inorganic fine particles is formed. Accordingly, precursor particles including the hydrophobic solvent in the hollow portion surrounded by the shell, are obtained.

The polymerization system is not particularly limited. For example, a batch system, a semicontinuous system or a continuous system may be employed.

The polymerization temperature is preferably from 40°C to 90°C, and more preferably from 50°C to 80°C.

The polymerization reaction time is preferably from 1 hour to 48 hours, and more preferably from 1.5 hours to 36 hours. The polymerization reaction time is preferably adjusted so that the polymerization conversion rate of the polymerizable monomer reaches 100%.

(4) Solid-liquid separation step

In the first production method, the solid-liquid separation step includes performing solid-liquid separation of the precursor composition obtained by the above-described polymerization step, to obtain the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

In the first production method, the solvent removal step includes removing the included hydrophobic solvent from the precursor particles.

By removing the included hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the included hydrophobic solvent may be removed from the precursor particles as follows:

the precursor composition obtained in the polymerization step, which is in the form of slurry, is not subjected to solid-liquid separation and, instead, the included hydrophobic solvent may be removed from the precursor particles in the slurry containing the precursor particles and the aqueous medium. That is, this another method is the second production method described above.

In this method, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 72 hours.

By this method, a slurry of the hollow particles including an inert gas is obtained. The slurry is subjected to solid-liquid separation to obtain hollow particles, and the obtained hollow particles are dried, thereby obtaining the hollow particles in which the hollow portion is occupied by gas. The solid-liquid separation method is the same as the method described above in "(4) Solid-liquid separation step".

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the included hydrophobic solvent from the precursor particles and subjecting the slurry to solid-liquid separation. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following particle interior substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic dispersion stabilizer, washing is preferably carried out by adding alkali to the precursor composition containing the precursor particles.

When the acid-soluble inorganic dispersion stabilizer is used as the dispersion stabilizer, the pH of the precursor composition is preferably adjusted to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

II. Hollow particles

The hollow particles of the present disclosure are particles which comprise a shell (outer shell) formed from an organic-inorganic composite material containing a resin and inorganic fine particles and a hollow portion surrounded by the shell, and the resin contains the polymer of the polymerizable monomer.

In the present disclosure, the hollow portion means a hollow space that is clearly distinguished from the shell formed from the organic-inorganic composite material. The shell of the hollow particles may have a porous structure. In this case, the hollow portion has a size that is clearly distinguishable from many minute spaces uniformly dispersed in the porous structure.

The hollow particles of the present disclosure may have one or two or more hollow portions. From the viewpoint of maintaining good balance between the high void ratio and the mechanical strength, and from the viewpoint of obtaining the hollow particles which are excellent in balance between the pressure resistance, the dielectric property and the CTE, the hollow particles preferably have only one hollow portion. The hollow portion of the hollow particles can be determined by, for example, SEM observation of a cross-section of the particles or TEM observation of the particles as they are.

The hollow particles of the present disclosure may contain, as impurities, a small amount of hollow particles comprising two or more hollow portions, or a small amount of particles not comprising a hollow portion. In the hollow particles of the present disclosure, the percentage of the number of particles comprising only one hollow portion is preferably 90% or more, and more preferably 95% or more.

The hollow portion of the hollow particles of the present disclosure may be filled with gas such as air, may be in a vacuum or reduced pressure state, or may contain a solvent. When the hollow particles of the present disclosure are used as a filler, from the viewpoint of obtaining the effects exerted by the hollow particles, such as a low permittivity, a low dielectric dissipation factor and low thermal expansion, the hollow portion is preferably filled with gas.

In the hollow particles of the present disclosure, the content of the inorganic fine particles is 20% by mass or more and 90% by mass or less with respect to 100% by mass of the solid content of the shell. When the content of the inorganic fine particles is equal to or more than the lower limit value, the hollow particles can be hollow particles having a low CTE. When the content of the inorganic fine particles is equal to or less than the upper limit value, a deterioration in the pressure resistance and dielectric property of the hollow particles can be suppressed. Accordingly, by controlling the content of the inorganic fine particles within the above range, the hollow particles which are excellent in balance between the pressure resistance, the dielectric property and the CTE are obtained. The content of the inorganic fine particles is preferably 30% by mass or more, and more preferably 40% by mass or more. On the other hand, the content of the inorganic fine particles is preferably 85% by mass or less, more preferably 80% by mass or less, still more preferably 70% by mass or less, and particularly preferably 60% by mass or less.

From the same viewpoint, the content by volume of the inorganic fine particles when the volume of the shell is 100% by volume, is preferably 5% by volume or more, more preferably 10% by volume or more, and still more preferably 20% by volume or more. On the other hand, it is preferably 80% by volume or less, more preferably 70% by volume or less, and still more preferably 60% by volume or less.

From the viewpoint of improving the pressure resistance and dielectric property of the hollow particles, the content of the polymer in the hollow particles of the present disclosure is preferably 10% by mass or more, more preferably 15% by mass or more, and still more preferably 20% by mass or more, with respect to 100% by mass of the solid content of the shell. From the viewpoint of sufficiently containing the inorganic fine particles and decreasing the CTE of the hollow particles, the content of the polymer is preferably 80% by mass or less, more preferably 70% by mass or less, and still more preferably 60% by mass or less.

The shell of the hollow particles of the present disclosure may further contain another material that is different from the inorganic fine particles and the polymer, to the extent that does not impair the effects of the present disclosure. When the shell contains the another material, the total mass of the polymer and the inorganic fine particles is preferably 95% by mass or more, more preferably 97% by mass or more, and still more preferably 99% by mass or more, with respect to 100% by mass of the solid content of the shell.

A preferred composition of the polymer contained in the hollow particles of the present disclosure, corresponds to the above-described preferred composition of the polymerizable monomer.

In 100 parts by mass of all monomer units of the polymer, the content of the crosslinkable monomer unit is preferably 70 parts by mass or more, more preferably 80 parts by mass or more, and still more preferably 90 parts by mass or more, from the viewpoint of improving the pressure resistance of the hollow particles and retaining the inorganic fine particles in the shell. When the polymer contains a non-crosslinkable monomer unit, in 100 parts by mass of all the monomer units of the polymer, the content of the crosslinkable monomer unit may be 98 parts by mass or less, or it may be 96 parts by mass or less, for example.

From the viewpoint of improving the pressure resistance of the hollow particles, the crosslinkable monomer unit preferably contains at least a difunctional crosslinkable monomer unit. When the crosslinkable monomer unit contains a difunctional crosslinkable monomer unit in combination with a trifunctional or higher-functional crosslinkable monomer unit, the pressure resistance may further improve. In the present disclosure, the crosslinkable monomer unit derived from the difunctional crosslinkable monomer may be referred to as "difunctional crosslinkable monomer unit", and the crosslinkable monomer unit derived from the trifunctional or higher-functional crosslinkable monomer may be referred to as "trifunctional or higher-functional crosslinkable monomer unit".

When the crosslinkable monomer unit contains the difunctional crosslinkable monomer unit and the trifunctional or higher-functional crosslinkable monomer unit, in 100 parts by mass of the crosslinkable monomer units, the content of the trifunctional or higher-functional crosslinkable monomer unit is preferably 5 parts by mass or more, more preferably 10 parts by mass or more, and still more preferably 20 parts by mass or more. On the other hand, it is preferably 50 parts by mass or less, and more preferably 40 parts by mass or less.

The polymer preferably contains a hydrocarbon monomer unit since the dielectric property of the hollow particles is easily improved. In 100 parts by mass of all monomer units of the polymer, the content of the hydrocarbon monomer unit is preferably 30 parts by mass or more, more preferably 50 parts by mass or more, still more preferably 70 parts by mass or more, and even more preferably 90 parts by mass or more, from the viewpoint of improving the dielectric property of the hollow particles.

The content by mass of each of the materials contained in the shell and the composition of the polymer contained in the shell can be obtained by, for example, elemental analysis such as X-ray fluorescence spectrometry (XRF) or simultaneous thermogravimetry-differential thermal analysis (TG-DTA). For example, from elemental analysis by XRF and an ash content obtained by TG-DTA, the content by mass of the inorganic fine particles in the shell can be obtained. The content by volume of each of the materials contained in the shell can be calculated by dividing the content by mass of each material by the specific gravity of the material.

Also, by using the above-described preferred inorganic fine particles in the preferred content described above and carrying out the polymerization reaction of the polymerizable monomer until the polymerization conversion rate reaches 100%, the content by mass of each of the materials contained in the shell and the composition of the polymer contained in the shell can be obtained from the fed amounts of raw materials during production. The content by volume of each of the materials in the shell can be obtained from the fed amounts of the raw materials during production and the specific gravity of each raw material.

In the shell of the hollow particles of the present disclosure, at least a part of each of the inorganic fine particles is preferably embedded in the resin. As a result, the surface smoothness of the shell improves, and a decrease in the pressure resistance of the hollow particles and a decrease in the adhesion between the hollow particles and the resin when adding the hollow particles to the resin, both of which are attributable to the surface roughness of the shell, can be suppressed, accordingly. From the same viewpoint, the inorganic fine particles are preferably entirely embedded in the resin.

Whether each of the inorganic fine particles is embedded in the shell of the hollow particles or not, can be confirmed as follows, for example. First, by XRF, TG-DTA or the like, it is confirmed that the inorganic fine particles are contained in the shell. Then, the cross-section of the hollow particles is observed by SEM. It can be recognized that at least a part of each of the inorganic fine particles is embedded in the resin, when the inorganic fine particles simply do not attach to the shell surface, as a result of the SEM observation of the outer surface and cross-section of the hollow particles containing the inorganic fine particles in the shell. In addition, it can be recognized that each of the inorganic fine particles is entirely embedded in the resin, when the surface smoothness of the shell is equivalent to hollow polymer particles free of inorganic fine particles, and when inorganic fine particles are not found on the inner and outer surfaces of the shell. The hollow particles of the present disclosure may contain such inorganic fine particle, that a part thereof is exposed from the shell surface and a part thereof is embedded in the shell.

To embed at least a part of each of the inorganic fine particles in the resin of the shell of the hollow particles of the present disclosure, the following are effective, for example: selecting the inorganic fine particles having the above-described preferred size, controlling the content of the inorganic fine particles within the above-described preferred range, and using the inorganic fine particles surface-treated with the surface treatment agent containing a radically reactive functional group or with another preferred surface treatment agent. It is estimated that as a result of using the inorganic fine particles surface-treated with the surface treatment agent containing a radically reactive functional group, during the process of producing the hollow particles, the polymerization reaction of the polymerizable monomer easily starts and proceeds from the inorganic fine particles as a nucleus, and the polymer is easily formed so as to cover the inorganic fine particles. Whether or not the inorganic fine particles are surface-treated with the surface treatment agent containing a radically reactive functional group, can be confirmed by confirming the functional group by infrared spectroscopy, or it can be confirmed from methanol hydrophobicity or the like. The radically reactive functional group of the surface-treated inorganic fine particles is estimated to react with the polymerizable functional group of the polymerizable monomer in the polymerization step; however, it may remain unreacted.

Also, the inorganic fine particles may be distributed near the outer surface of the shell. The position where the inorganic fine particles are present can be confirmed by depth-direction elemental analysis by glow discharge optical emission spectrometry or the like.

The void ratio of the hollow particles of the present disclosure is 50% or more. It is preferably 60% or more, and more preferably 65% or more. When the void ratio is equal to or more than the lower limit value, the hollow particles are excellent in dielectric property, and they are also excellent in lightness in weight, heat resistance, heat insulation property, and so on. The upper limit of the void ratio of the hollow particles is not particularly limited. From the viewpoint of suppressing a decrease in the pressure resistance of the hollow particles, it is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 cm$^3$ of the hollow particles are introduced into a measuring flask with a volume of 100 cm$^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ (g/cm$^3$) of the hollow particles is calculated by the following formula (I).

Apparent density $D_1$ = [Mass of the hollow particles]/(100- [Mass of the isopropanol]/[Specific gravity of the isopropanol at the measuring temperature])      Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 cm$^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ (g/cm$^3$) of the hollow particles is calculated by the following formula (II).

True density $D_0$ = [Mass of the pulverized hollow particles]/(100-[Mass of the isopropanol]/[Specific gravity of the isopropanol at the measuring temperature])      Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100-(Apparent density $D_1$/True density $D_0$)×100      Formula (III)

The volume average particle diameter of the hollow particles of the present disclosure is 1.0 um or more and 50.0 um or less. The volume average particle diameter of the hollow particles is, as the lower limit thereof, preferably 1.5 um or more, and more preferably 2.0 um or more. On the other hand, the volume average particle diameter of the hollow particles is, as the upper limit thereof, preferably 40.0 um or less, more preferably 30.0 um or less, and still more preferably 20.0 um or less. When the volume average particle diameter of the hollow particles is equal to or more than the lower limit value, both a high void ratio and excellent pressure resistance are easily obtained; the aggregability of the hollow particles decreases; and the hollow particles exert excellent dispersibility, accordingly. When the volume average particle diameter of the hollow particles is equal to or less than the upper limit value, the CTE of the hollow particles is likely to decrease; the uniformity of the shell is easily improved; and the hollow particles excellent in pressure resistance are easily obtained, accordingly.

In the present disclosure, the volume average particle diameter (Dv) of the hollow particles can be obtained by measuring the particle diameters of 100,000 hollow particles with a particle size analyzer by the Coulter counter method and calculating the volume average thereof.

The particle diameter of the hollow particles of the present disclosure can be controlled by, for example, the content of the dispersion stabilizer with respect to the total mass of the polymerizable monomer, the inorganic fine particles and the hydrophobic solvent.

The thickness of the shell of the hollow particles of the present disclosure is not particularly limited. From the viewpoint of improving the pressure resistance, the shell thickness is preferably 0.10 um or more, more preferably 0.12 um or more, and still more preferably 0.15 um or more. From the viewpoint of increasing the void ratio, it is preferably 3.00 um or less, more preferably 2.00 um or less, and still more preferably 1.60 um or less.

In the present disclosure, the thickness of the shell of the hollow particles is a value calculated as follows. The inner diameter r of the hollow particles is calculated by the following formula (1) using the volume average particle diameter R and void ratio of the hollow particles, and the thickness of the shell is calculated by the following formula (2) using the inner diameter r and the volume average particle diameter R.

$$4/3\pi \times (R/2)^3 \times (\text{Void ratio}/100) = 4/3\pi \times (r/2)^3 \quad \text{Formula (1)}$$

$$\text{Shell thickness} = (R-r)/2 \quad \text{Formula (2)}$$

The void ratio in the formula (1) is a numerical value expressed in percentage.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production, pressure resistance and so on. The shape of the particles can be determined by SEM or TEM, for example.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 10 shown in the diagram (5) of FIG. 2. In this example, one thin film is provided on the outside, and the interior is filled with gas.

In the hollow particles of the present disclosure, from the viewpoint of dielectric property and pressure resistance, the percentage of particles having a circularity of 0.85 or less is preferably small. The particles having a circularity of 0.85 or less are typically cracked particles or deformed particles such as dented particles. In the present disclosure, such particles may be referred to as "irregular-shaped particles". Such irregular-shaped hollow particles have a low void ratio compared to spherical hollow particles; therefore, they are poor in dielectric property. Accordingly, the dielectric property of the hollow particles can be improved by decreasing the percentage of the irregular-shaped particles included in the hollow particles.

Also, such irregular-shaped particles are poor in pressure resistance compared to spherical particles, since external pressure is likely to be locally applied thereto. In addition, the irregular-shaped particles have the following problem: compared to spherical particles, the irregular-shaped particles are poor in dispersibility since they are likely to aggregate when dispersed in the matrix resin. When the irregular-shaped particles are dispersed in the matrix resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the irregular-shaped particles included in the hollow particles.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

From the viewpoint of obtaining a low permittivity, the relative permittivity of the hollow particles of the present disclosure at a frequency of 1 GHz is preferably 2.00 or less, more preferably 1.80 or less, and still more preferably 1.60 or less. The lower limit of the relative permittivity of the hollow particles of the present disclosure at a frequency of 1 GHz, is not particularly limited, and it may be 1.00 or more, for example.

From the viewpoint of obtaining a low dielectric dissipation factor, the dielectric dissipation factor of the hollow particles of the present disclosure at a frequency of 1 GHz is preferably $3.00 \times 10^{-3}$ or less, more preferably $2.00 \times 10^{-3}$ or less, and still more preferably $1.50 \times 10^{-3}$ or less. The lower limit of the dielectric dissipation factor of the hollow particles of the present disclosure at a frequency of 1 GHz, is not particularly limited, and it may be $1.00 \times 10^{-4}$ or more, for example.

In the present disclosure, the relative permittivity and dielectric dissipation factor of the particles are measured by use of a perturbation-type measuring device, at a measurement frequency of 1 GHz and at room temperature.

From the viewpoint of obtaining low thermal expansion, the thermal expansion coefficient of the hollow particles of the present disclosure at 23°C to 100°C, is preferably 50 ppm/°C or less, more preferably 45 ppm/°C or less, and still more preferably 40 ppm/°C or less. The lower limit of the thermal expansion coefficient is not particularly limited. For example, it may be 10 ppm/°C or more, or may be 20 ppm/°C or more.

In the present disclosure, the thermal expansion coefficient $\alpha_p$ of the particles can be obtained by the following formula (A):

$$\alpha_p = (\alpha_c - SG_r \times \alpha_r)/W_p \quad \text{Formula (A)}$$

(where $\alpha_c$ is the thermal expansion coefficient of a molded plate comprising the matrix resin and the particles; $\alpha_r$ is the thermal expansion coefficient of the matrix resin alone; $SG_r$ is the volume ratio of the matrix resin of the molded plate; and $W_p$ is the volume ratio of the particles in the molded plate.)

In accordance with JIS K7197, the thermal expansion coefficient is measured in a predetermined temperature range.

As the matrix resin, for example, epoxy resin is used. The matrix resin may contain an additive for curing resin, such as a curing agent and a curing catalyst.

From the viewpoint of pressure resistance, the compressive strength of the hollow particles of the present disclosure, which is measured in accordance with JIS R1639-5, is preferably 2.0 MPa or more, more preferably 2.5 MPa or more, still more preferably 3.0 MPa or more, and even more preferably 3.5 MPa or more. As the compressive strength increases, the pressure resistance of the hollow particles improves. The upper limit of the compressive strength of the hollow particles is not particularly limited. For example, it may be 15.0 MPa or less, may be 12.0 MPa or less, or may be 10.0 MPa or less.

The thermal decomposition initiation temperature of the hollow particles of the present disclosure is preferably from 150°C to 400°C, and more preferably from 200°C to 350°C. When the thermal decomposition initiation temperature is in the range, the hollow particles are excellent in heat resistance.

In the present disclosure, the thermal decomposition initiation temperature of the hollow particles can be measured as a 5% weight reduction temperature, using a TG-DTA device in an air atmosphere, in the conditions of an air flow rate of 230 mL/min and a temperature increase rate of 10°C/min.

III. Applications of the hollow particles

As described above, the hollow particles of the present disclosure are suitably used as a filler for electronic material applications. For example, by adding the hollow particles of the present disclosure as a filler to a resin composition used in electronic materials, the relative permittivity, dielectric dissipation factor and thermal expansion coefficient of the resin composition can be decreased, and the resin composition can be a resin composition that is more suitable for electronic material applications. The resin composition mixed with the hollow particles of the present disclosure is preferably used in materials for semiconductor devices. The materials are used for an electronic circuit board, a prepreg, interlayer insulation materials, dry film resists, solder resists, bonding wires, magnet wires, semiconductor encapsulating materials, epoxy encapsulating materials, molded underfill materials, underfill materials, die bonding pastes, buffer coating materials, copper-clad laminates, flexible substrates, high frequency device modules, antenna modules and automotive radars, for example. Of them, the resin composition is preferably used as a material for interlayer insulation materials, solder resists, magnet wires, epoxy encapsulating materials, underfill materials, buffer coating materials, copper-clad laminates, flexible substrates, high frequency device modules, antenna modules and automotive radars.

Also, the hollow particles of the present disclosure are useful as an additive for insulating resin sheets that are used for the production of electronic parts such as a printed circuit board. An insulating resin sheet containing the hollow particles of the present disclosure can be produced as follows, for example: a resin composition is prepared by mixing the hollow particles of the present disclosure and the above-described thermoplastic resin, thermosetting resin, thermoplastic elastomer, or a mixture thereof, and the resin composition is molded into a sheet by applying the composition to one or both surfaces of a sheet-shaped substrate and drying the applied composition, by extrusion molding of the composition, by transferring the composition, etc., thereby producing the insulating resin sheet. When the resin or elastomer contained in the insulating resin sheet is adhesive, the insulating resin sheet can be used as an adhesive sheet. More specifically, it can be used as a bonding sheet, for example. A bonding sheet is a material for forming insulating adhesive layers which are used to attach a conductor layer and an organic insulating layer in the production of a multi-layer printed circuit board.

Also, the hollow particles of the present disclosure can be used as a filler in not only the electronic material applications, but also in the following applications, for example: members such as a light reflective material, a heat insulation material, a sound insulation material and a low dielectric material, which are used in various kinds of fields such as the automotive field, the architecture field, the aviation field and the space field; food containers; footwears such as sports shoes and sandals; components of household appliances; components of bicycles; stationery supplies; tools; and the filament of 3D printers. The hollow particles of the present disclosure can be contained as a filler in, for example, a molded body formed by use of a rubber or a resin or in a molded body formed by use of a material containing reinforced fibers and a rubber or a resin. As the reinforced fibers, examples include, but are not limited to, organic or inorganic fibers such as carbon fibers, glass fibers, aramid fibers, polyethylene fibers and cellulose nanofibers.

As described above, the hollow particles of the present disclosure can be mixed with a resin or a rubber and used. The resin is not particularly limited. For example, the resin may be a thermoplastic resin, a thermosetting resin, a room temperature curable resin, a thermoplastic elastomer, or a mixture thereof.

As the thermosetting resin, examples include, but are not limited to, phenolic resin, melamine resin, urea resin, unsaturated polyester resin, epoxy resin, polyurethane resin, silicon resin, alkyd resin, thermosetting modified polyphenylene ether resin, thermosetting polyimide resin, benzoxazine resin, allyl resin, aniline resin, maleimide resin, bismaleimide triazine resin, liquid crystalline polyester resin, vinyl ester resin, cyanate ester resin and polyetherimide resin.

As the room temperature curable resin, examples include, but are not limited to, an adhesive that is curable at room temperature by addition of a catalyst, such as an epoxy adhesive, a silicone adhesive and an acrylic adhesive.

Depending on the resin type, the thermosetting resin and the room temperature curable resin may be appropriately used in combination with a catalyst or a curing agent such as an amine, an acid anhydride, an imidazole, a thiol, a phenol, a naphthol, a benzoxazine, a cyanate ester and a carbodiimide.

As the thermoplastic resin, examples include, but are not limited to, polyolefin resin (such as polypropylene and polyethylene), polyamide resin (such as PA6, PA66 and PA12), polyimide resin, polyamideimide resin, polyetherimide resin, polyetherketoneketone resin, polyvinyl chloride resin, polystyrene resin, poly(meth)acrylate resin, polycarbonate resin, polyphenylene sulfide resin, polystyrene resin, polyphenylene oxide resin, a liquid crystal polymer (LCP), polyvinylidene fluoride resin, acrylonitrile-butadiene-styrene copolymer (ABS) resin, an acrylonitrile-styrene copolymer (AS) resin, polyphenylene ether resin, polyester resin and polytetrafluoroethylene resin.

As the thermoplastic elastomer, a thermoplastic elastic polymer that is conventionally used as a molding resin, may be used, such as a urethane-based elastomer, a styrene-based elastomer, an olefin-based elastomer, an amide-based elastomer and an ester-based elastomer. The thermoplastic elastomer is an elastomer having the following properties: it shows rubber elasticity at normal temperature (25°C) and it can be plasticized and molded at high temperature.

The rubber is not particularly limited. As the rubber, examples include, but are not limited to, natural rubber (NR), isoprene rubber (IR), butadiene rubber (BR), styrene-butadiene copolymer rubber (SBR), acrylonitrile-butadiene copolymer rubber (NBR) and ethylene-propylene-diene terpolymer (EPDM).

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

Examples

Hereinafter, the present disclosure will be described further in detail, with reference to Examples and Comparative Examples. However, the present disclosure is not limited to these examples. Herein, part(s) and % are on a mass basis unless otherwise noted.

[Production Example 1]

First, 10 parts of vinylmethoxysilane was diluted with 10 parts of ethanol as an organic solvent, thereby preparing a vinylsilane solution. Next, 100 parts of a silica powder having a primary average particle diameter of 18 nm (product name: AEROSIL (registered trademark) OX 130, manufactured by: Nippon Aerosil Co., Ltd.) was put in a reaction container. In a nitrogen atmosphere, while stirring the silica powder by a rotating blade, 1 part of water and the prepared vinylsilane solution were added to the reaction container. In a nitrogen atmosphere, they were mixed while stirring them at a temperature of 200°C for 120 minutes. Then, the thus-obtained mixture was cooled by cooling water. Then, the mixture was heated to 80°C under reduced pressure for complete removal of the solvent, thereby obtaining silica fine particles A.
As for the obtained silica fine particles A, the relative permittivity was 2.98, and the dielectric dissipation factor was $6.2 \times 10^{-3}$, both at 23°C and 1 GHz; the CTE at 23°C to 100°C was 0.5 ppm/°C; and the volume average primary particle diameter was 18 nm.

[Production Example 2]

Silica fine particles B were obtained in the same manner as Production Example 1, except that as the silica powder, a silica powder having a primary average particle diameter of 500 nm (product name: SO-C2, manufactured by: Admatechs Co., Ltd.) was used.
As for the obtained silica fine particles B, the relative permittivity was 2.94, and the dielectric dissipation factor was $6.9 \times 10^{-4}$, both at 23°C and 1 GHz; the CTE at 23°C to 100°C was 0.5 ppm/°C; and the volume average primary particle diameter was 500 nm.

[Production Example 3]

Silica fine particles C were obtained in the same manner as Production Example 1, except that a trimethylmethoxysilane solution was used instead of the vinylsilane solution, which was prepared by diluting 10 parts of trimethylmethoxysilane with 10 parts of ethanol as an organic solvent.
As for the obtained silica fine particles C, the relative permittivity was 2.98, and the dielectric dissipation factor was $6.2 \times 10^{-3}$, both at 23°C and 1 GHz; the CTE at 23°C to 100°C was 0.5 ppm/°C; and the volume average primary particle diameter was 18 nm.

[Production Example 4]

Silica fine particles D were obtained in the same manner as Production Example 1, except that as the silica powder, a silica powder having a primary average particle diameter of 50 nm (product name: AEROSIL (registered trademark) OX 50, manufactured by: Nippon Aerosil Co., Ltd.) was used.
For the obtained silica fine particles D, the relative permittivity was 2.98, and the dielectric dissipation factor was $6.2 \times 10^{-3}$, both at 23°C and 1 GHz; the CTE at 23°C to 100°C was 0.5 ppm/°C; and the volume average primary particle diameter was 50 nm.
As silica fine particles E, Y100SV (product name, manufactured by: Admatechs Co., Ltd.) was prepared, which is silica fine particles surface-treated with vinylmethoxysilane.
As for the silica fine particles E, the relative permittivity was 2.98, and the dielectric dissipation factor was $6.2 \times 10^{-3}$, both at 23°C and 1 GHz; the CTE at 23°C to 100°C was 0.5 ppm/°C; and the volume average primary particle diameter was 100 nm.
The relative permittivities and dielectric dissipation factors at 23°C and 1 GHz of the silica fine particles A to E were measured by the same method as the below-described measurement of the relative permittivity and dielectric dissipation factor at 23°C and 1 GHz of the hollow particles. The CTEs at 23°C to 100°C of the silica fine particles A to E were measured by the same method as the below-described measurement of the thermal expansion coefficient (CTE) of the hollow particles at 23°C to 100°C. The volume average primary particle diameters of the silica fine particles A to E were obtained as follows: the primary particle diameters of 100 particles were measured by SEM image analysis, and the volume average thereof was calculated, thereby obtaining the volume average primary particle diameters of the silica fine particles A to E.

[Example 1]

(1) Mixture liquid preparation step

First, the following materials were mixed to produce an oil phase.

Divinylbenzene: 32.06 parts
Ethylvinylbenzene: 1.34 parts
Silica fine particles A: 8.1 parts
t-Butylperoxy diethylacetate (oil-soluble polymerization initiator): 0.89 parts
Hydrophobic solvent: Heptane 58.5 parts

Meanwhile, in a stirring tank at room temperature, an aqueous solution in which 13.72 parts of sodium hydroxide (an alkali metal hydroxide) was dissolved in 55 parts of deionized water, was gradually added under stirring to an aqueous solution in which 19.59 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 10 parts). The dispersion was used as an aqueous phase.
The obtained aqueous phase and oil phase were mixed, thereby preparing a mixture liquid.

(2) Suspension step

The mixture liquid obtained in the mixture liquid preparation step was suspended by stirring with a disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Polymerization step

A polymerization reaction was carried out by stirring the suspension obtained in the suspension step for one and half hours in a nitrogen atmosphere at a temperature of 65°C, until the polymerization conversion rate reached 100%, thereby obtaining a precursor composition in which precursor particles including the hydrophobic solvent were dispersed in water.

(4) Washing step and solid-liquid separation step

The precursor composition was washed with dilute sulfuric acid (23°C, 10 minutes) to bring the pH of the composition to 5.5 or less. Next, water was separated therefrom by filtration. Then, 200 parts of deionized water was added to reslurry the resultant, and a water washing treatment (washing, filtering and dehydrating) was repeatedly performed several times at room temperature (23°C). The resultant was separated by filtration, thereby obtaining a solid component. The obtained solid component was dried with a dryer at a temperature of 40°C, thereby obtaining precursor particles including the hydrophobic solvent.

(5) Solvent removal step

The precursor particles obtained in the solid-liquid separation step were subjected to heating treatment for 12 hours with a vacuum dryer in a nitrogen atmosphere at 200°C, thereby removing the included hydrophobic solvent from the particles. Accordingly, the hollow particles of Example 1 were obtained.

[Examples 2 to 4]

Hollow particles of Examples 2 to 4 were obtained in the same manner as Example 1, except that in "(1) Mixture liquid preparation step", the amount of the added polymerizable monomer, the amount of the added inorganic fine particles, and the amount of the added hydrophobic solvent were changed according to Table 1.

[Examples 5 and 6]

Hollow particles of Examples 5 and 6 were obtained in the same manner as Example 1, except for the following: in "(1) Mixture liquid preparation step", by changing the magnesium chloride amount from 19.59 parts to 7.83 parts and the sodium hydroxide amount from 13.72 parts to 5.49 parts, the magnesium hydroxide colloidal dispersion amount was changed to an amount in which the magnesium hydroxide amount was 4 parts; moreover, in Example 5, the type of the inorganic fine particles was changed according to Table 1, and in Example 6, the type and amount of the added polymerizable monomer, the amount of the added inorganic fine particles, and the type and amount of the added hydrophobic solvent were changed according to Table 1.

[Comparative Example 1]

Hollow particles (hollow polymer particles) of Comparative Example 1 were obtained in the same manner as Example 1, except that in "(1) Mixture liquid preparation step", the silica fine particles A were not added, and the amount of the added polymerizable monomer and that of the added hydrophobic solvent were changed according to Table 1.

[Comparative Example 2]

Hollow particles (hollow polymer particles) of Comparative Example 2 were obtained in the same manner as Example 1, except for the following: in "(1) Mixture liquid preparation step", the silica fine particles A were not added, and by changing the magnesium chloride amount from 19.59 parts to 11.75 parts and the sodium hydroxide amount from 13.72 parts to 8.23 parts, the magnesium hydroxide colloidal dispersion amount was changed to an amount in which the magnesium hydroxide amount was 6 parts; moreover, the type and amount of the added polymerizable monomer and those of the added hydrophobic solvent were changed according to Table 1.

[Comparative Example 3]

Hollow particles (hollow silica particles) of Comparative Example 3 were obtained in the same manner as Example 3 described in Patent Document 2.

First, 7 parts of an EO-PO-EO block copolymer (manufactured by ADEKA) was dissolved in 1250 parts of pure water to prepare an aqueous solution; 42 parts of n-dodecane was added to the aqueous solution; and the mixture was stirred by highpressure emulsifying machine, thereby producing a fine emulsion.

To 1300 parts of the obtained fine emulsion, 41 parts of a silicate soda aqueous solution ($SiO_2$ concentration: 10.4% by mass, $Na_2O$ concentration: 3.6% by mass) and hydrochloric acid were added and stirred so as to adjust the pH of the thus-obtained mixture to 2. In addition, a sodium hydroxide aqueous solution was added in a dropwise manner so as to adjust the pH of the thus-obtained mixture to 6. A dispersion thus obtained was heated to 70°C; a sodium hydroxide aqueous solution was added to obtain a mixture with a pH of 9; and then 460 parts of a silicate soda aqueous solution ($SiO_2$ concentration: 10.4% by mass, $Na_2O$ concentration: 3.6% by mass) and 0.5 M hydrochloric acid were added so as to adjust the pH of the thus-obtained mixture to 9, thereby obtaining a hollow silica precursor dispersion.

The obtained hollow silica precursor dispersion was subjected to filtration and washing. Then, in a nitrogen atmosphere, the dispersion was dried at 60°C for one hour, dried at 400°C for 4 hours, and then dried at 800°C for 4 hours, thereby obtaining hollow silica fired particles.

Next, 10 parts of the obtained hollow silica fired particles, 120 ml of methyl ethyl ketone and 0.8 parts of hexamethyldisilazane were mixed. The mixture was stirred at room temperature for three hours. Then, the mixture was subjected to filtration under reduced pressure, washed with methyl ethyl ketone, and then subjected to vacuum drying at 150°C for two hours in a vacuum drier. A solid thus obtained was pulverized with an agate mortar, thereby obtaining surface-treated hollow silica particles of Comparative Example 3.

[Examples 7 to 9]

Hollow particles of Examples 7 to 9 were obtained in the same manner as Example 1, except that in "(1) Mixture liquid preparation step", the type of the inorganic fine particles was changed according to Table 2.

[Example 10]

Hollow particles of Example 10 were obtained in the same manner as Example 1, except for the following: in "(1) Mixture liquid preparation step", by changing the magnesium chloride amount from 19.59 parts to 7.83 parts and the sodium hydroxide amount from 13.72 parts to 5.49 parts, the magnesium hydroxide colloidal dispersion amount was changed to an amount in which the magnesium hydroxide amount was 4 parts; moreover, the type of the inorganic fine particles was changed according to Table 2.

[Example 11]

Hollow particles of Example 11 were obtained in the same manner as Example 1, except that in "(1) Mixture liquid preparation step", the type of the inorganic fine particles was changed according to Table 2.

[Evaluation]

The hollow particles obtained in the examples and the comparative examples were measured and evaluated as follows. The results are shown in Table 1.

1. Volume average particle diameter (Dv) of the hollow particles

The volume average particle diameter of the hollow particles was measured with a particle size distribution measuring device by the Coulter counter method (product name: MULTISIZER 4e, manufactured by: Beckman Coulter, Inc.) The measurement condition was as follows.

Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Density and void ratio of the hollow particles

2-1. Measurement of the apparent density of the hollow particles

First, approximately 30 cm$^3$ of the hollow particles were introduced into a measuring flask with a volume of 100 cm$^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/cm$^3$) of the hollow particles was calculated by the formula (I) described above.

2-2. Measurement of the true density of the hollow particles

The hollow particles were pulverized in advance; approximately 10 g of the pulverized hollow particles were introduced into a measuring flask with a volume of 100 cm$^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/cm$^3$) of the hollow particles was calculated by the formula (II) described above.

2-3. Calculation of void ratio

The void ratio of the hollow particles was calculated by the above-described formula (III) from the apparent density $D_1$ and the true density $D_0$.

3. Shell thickness of the hollow particles

The inner diameter r of the hollow particles was calculated by the following formula (1) using the volume average particle diameter R and void ratio of the hollow particles, and the thickness of the shell was calculated by the following formula (2) using the inner diameter r and the volume average particle diameter R.

$$4/3\pi \times (R/2)^3 \times (\text{Void ratio}/100) = 4/3\pi \times (r/2)^3 \quad \text{Formula (1)}$$

$$\text{Shell thickness} = (R-r)/2 \quad \text{Formula (2)}$$

4. Thermal expansion coefficient (CTE)

4-1. Production of epoxy resin plate containing hollow particles

First, 86 parts of epoxy resin (product name: JER828, manufactured by: Mitsubishi Chemical Corporation), 10 parts of the hollow particles, and 4 parts of 2-ethyl-4-methylimidazole as a curing agent, were mixed with a planetary mixer, thereby preparing a varnish.

The obtained varnish was applied to a thickness of 3 mm. The thus-obtained coating film was heated at 100°C in an oven under a nitrogen atmosphere for 30 minutes. Then, the heating temperature was increased to 160°C at a temperature increase rate of 2°C/min, and the coating film was further heated at 160°C for 180 minutes to cure the coating film, thereby producing an epoxy resin plate containing the hollow particles.

4-2. Measurement of thermal expansion coefficient (CTE) of hollow particles

In accordance with JIS K 7197, using a TMA device (manufactured by Rigaku Corporation, model: TMA-8311), the thermal expansion coefficient (CTE) of the epoxy resin plate containing the hollow particles produced above, was measured in the following measurement conditions.

(CTE measurement conditions)

Temperature range: 23°C to 300°C
Temperature increase rate: 5°C/min
Atmosphere: $N_2$ (100 mL/min)
Mode: Compression (load 49 mN)
Number of measurements: Each n = 1

From the measurement result, the thermal expansion coefficient of the epoxy resin plate containing the hollow particles in a temperature range of from 23°C to 100°C was obtained. The thermal expansion coefficient $\alpha_p$ of the hollow particles in a temperature range of from 23°C to 100°C was calculated by the following formula (A):

$$\alpha_p = (\alpha_c - SG_r \times \alpha_r)/W_p \quad \text{Formula (A)}$$

(where $\alpha_c$ is the thermal expansion coefficient of the epoxy resin plate containing the hollow particles in a temperature range of from 23°C to 100°C; $\alpha_r$ is the thermal expansion coefficient of the epoxy resin in a temperature range of from 23°C to 100°C; $SG_r$ is the volume ratio of the epoxy resin in the epoxy resin plate containing the hollow particles; and $W_p$ is the volume ratio of the hollow particles in the epoxy resin plate containing the hollow particles.)

5. Measurement of the relative permittivity (Dk) and dielectric dissipation factor (Df) of the hollow particles

Using a perturbation-type measuring device (manufactured by: AET Inc., model: ADMS01Nc), the relative permittivity and dielectric dissipation factor of the hollow particles were measured at a frequency of 1 GHz and at room temperature (23°C).

6. Compressive strength

As the compressive strength of the hollow particles, in accordance with JIS R1639-5, a compressive strength when the particle diameter in the direction in which load was applied was changed by 10%, was measured by use of a microcompression testing machine (model: MCT-510, manufactured by: Shimadzu Corporation) in the following conditions: measurement temperature 23°C, maximum force 2.000 mN, and loading rate 0.0466 mN/sec.

[Table 1]

Table 1

| | | Example 1 | Example 2 | Example 3 |
|---|---|---|---|---|
| Polymerizable monomer | Divinylbenzene (parts) | 32.06 | 21.50 | 9.50 |
| | Ethylvinylbenzene (parts) | 1.34 | 0.90 | 0.40 |
| | Ethylene glycol di-methacrylate (parts) | | | |
| | Pentaerythritol tetraa-crylate (parts) | | | |
| Inorganic fine particles | Type | Silica fine particles A | Silica fine particles A | Silica fine particles A |
| | Surface treatment agent | Vinylmethoxysilane | Vinylmethoxysilane | Vinylmethoxysilane |
| | Volume average primary particle diameter (nm) | 18 | 18 | 18 |
| | Ratio of particle diameter to shell thickness | 0.15 | 0.09 | 0.11 |
| | (Parts) | 8.1 | 24.4 | 43.1 |
| | (% by volume) | 10 | 33 | 66 |
| | (% by mass) | 20 | 52 | 81 |
| Hydrophobic solvent | Heptane (parts) | 58.5 | 53.2 | 47.0 |
| | Cyclohexane (parts) | | | |
| Hollow particles | Dv ($\mu$m) | 2.1 | 3.4 | 2.8 |
| | Void ratio (%) | 70 | 70 | 70 |
| | Shell thickness ($\mu$m) | 0.12 | 0.19 | 0.16 |
| | CTE (ppm/°C) | 46 | 38 | 28 |
| | Relative permittivity Dk @1 GHz | 1.40 | 1.45 | 1.52 |
| | Dielectric dissipation factor Df @1 GHz | 3.80E-04 | 7.60E-04 | 1.30E-03 |
| | Compressive strength (MPa) | 5.4 | 4.9 | 3.6 |

Table 1-continued (1)

| | | Example 4 | Example 5 | Example 6 |
|---|---|---|---|---|
| Polymerizable monomer | Divinylbenzene (parts) | 11.14 | 32.06 | |
| | Ethylvinylbenzene (parts) | 0.46 | 1.34 | |
| | Ethylene glycol dimethacrylate (parts) | | | 9.36 |
| | Pentaerythritol tetraa-crylate (parts) | | | 2.34 |

(continued)

| | | Example 4 | Example 5 | Example 6 |
|---|---|---|---|---|
| Inorganic fine particles | Type | Silica fine particles A | Silica fine particles B | Silica fine particles A |
| | Surface treatment agent | Vinylmethoxysilane | Vinylmethoxysilane | Vinylmethoxysilane |
| | Volume average primary particle diameter (nm) | 18 | 500 | 18 |
| | Ratio of particle diameter to shell thickness | 0.14 | 0.85 | 0.01 |
| | (Parts) | 25.4 | 8.1 | 25.4 |
| | (% by volume) | 50 | 10 | 50 |
| | (% by mass) | 69 | 20 | 69 |
| Hydrophobic solvent | Heptane (parts) | 63.0 | 58.5 | |
| | Cyclohexane (parts) | | | 62.9 |
| Hollow particles | Dv ($\mu$m) | 3.5 | 10.2 | 28.5 |
| | Void ratio (%) | 80 | 69 | 70 |
| | Shell thickness ($\mu$m) | 0.13 | 0.59 | 1.60 |
| | CTE (ppm/°C) | 31 | 45 | 47 |
| | Relative permittivity Dk @1 GHz | 1.33 | 1.41 | 1.51 |
| | Dielectric dissipation factor Df @1 GHz | 6.90E-04 | 4.20E-04 | 1.60E-03 |
| | Compressive strength (MPa) | 3.0 | 6.3 | 8.4 |

Table 1-continued (2)

| | | Comparative Example 1 | Comparative Example 2 | Comparative Example 3 (Hollow silica particles) |
|---|---|---|---|---|
| Polymerizable monomer | Divinylbenzene (parts) | 37.15 | | |
| | Ethylvinylbenzene (parts) | 1.55 | | |
| | Ethylene glycol dimethacrylate (parts) | | 36.4 | |
| | Pentaerythritol tetraacrylate (parts) | | 9.1 | |
| Inorganic fine particles | Type | | | |
| | Surface treatment agent | | | |
| | Volume average primary particle diameter (nm) | | | |
| | Ratio of particle diameter to shell thickness | | | |
| | (Parts) | | | |
| | (% by volume) | | | |
| | (% by mass) | | | |
| Hydrophobic solvent | Heptane (parts) | 61.3 | | |
| | Cyclohexane (parts) | | 54.5 | |

(continued)

| | | Comparative Example 1 | Comparative Example 2 | Comparative Example 3 (Hollow silica particles) |
|---|---|---|---|---|
| Hollow particles | Dv (μm) | 2.6 | 9.0 | 0.3 |
| | Void ratio (%) | 70 | 65 | 55 |
| | Shell thickness (μm) | 0.15 | 0.60 | 0.03 |
| | CTE (ppm/°C) | 55 | 61 | 4 |
| | Relative permittivity Dk @1 GHz | 1.38 | 1.61 | 2.50 |
| | Dielectric dissipation factor Df @1 GHz | 6.20E-04 | 1.30E-02 | 4.00E-02 |
| | Compressive strength (MPa) | 6.2 | 25 | 0.2 |

[Table 2]

Table 2

| | | Example 7 | Example 8 | Example 9 |
|---|---|---|---|---|
| Polymerizable monomer | Divinylbenzene (parts) | 32.06 | 32.06 | 32.06 |
| | Ethylvinylbenzene (parts) | 1.34 | 1.34 | 1.34 |
| Inorganic fine particles | Type | Silica fine particles C | Silica fine particles D | Silica fine particles E |
| | Surface treatment agent | Trimethylmethoxysilane | Vinylmethoxysilane | Vinylmethoxysilane |
| | Volume average primary particle diameter (nm) | 18 | 50 | 100 |
| | Ratio of particle diameter to shell thickness | 0.15 | 0.42 | 0.83 |
| | (Parts) | 8.1 | 8.1 | 8.1 |
| | (% by volume) | 10 | 10 | 10 |
| | (% by mass) | 20 | 20 | 20 |
| Hydrophobic solvent | Heptane (parts) | 58.5 | 58.5 | 58.5 |

(continued)

| | | Example 7 | Example 8 | Example 9 |
|---|---|---|---|---|
| Hollow particles | Dv ($\mu$m) | 2.1 | 2.2 | 2.2 |
| | Void ratio (%) | 70 | 70 | 70 |
| | Shell thickness ($\mu$m) | 0.12 | 0.12 | 0.12 |
| | CTE (ppm/°C) | 46 | 46 | 46 |
| | Relative permittivity Dk @1 GHz | 1.41 | 1.40 | 1.40 |
| | Dielectric dissipation factor Df @1 GHz | 3.90E-04 | 3.80E-04 | 3.80E-04 |
| | Compressive strength (MPa) | 2.4 | 5.3 | 4.8 |

Table 2-continued (1)

| | | Example 10 | Example 11 |
|---|---|---|---|
| Polymerizable monomer | Divinylbenzene (parts) | 32.06 | 3206 |
| | Ethylvinylbenzene (parts) | 1.34 | 1.34 |
| Inorganic fine particles | Type | Silica fine particles D | Silica fine particles E |
| | Surface treatment agent | Vinylmethoxysilane | Vinylmethoxysilane |
| | Volume average primary particle diameter (nm) | 50 | 100 |
| | Ratio of particle diameter to shell thickness | 0.08 | 0.48 |
| | (Parts) | 8.1 | 8.1 |
| | (% by volume) | 10 | 10 |
| | (% by mass) | 20 | 20 |
| Hydrophobic solvent | Heptane (parts) | 58.5 | 58.5 |
| Hollow particles | Dv ($\mu$m) | 10.3 | 3.8 |
| | Void ratio (%) | 70 | 70 |
| | Shell thickness ($\mu$m) | 0.60 | 0.21 |
| | CTE (ppm/°C) | 46 | 46 |
| | Relative permittivity Dk @1 GHz | 1.41 | 1.40 |
| | Dielectric dissipation factor Df @1 GHz | 4.20E-04 | 3.80E-04 |
| | Compressive strength (MPa) | 10.4 | 5.7 |

The content by volume (% by volume) of the inorganic fine particles shown in Tables 1 and 2 was calculated from the content by mass (% by mass) of each of the materials in the shell and the specific gravity of each material.

The surface and cross-section of the hollow particles obtained in Examples 1 to 11 and those of the hollow polymer particles obtained in Comparative Examples 1 and 2 were observed by SEM. From the SEM observation results and the void ratio values, it was confirmed that the hollow particles obtained in Examples 1 to 11 were spherical particles having only one hollow portion. In the hollow particles obtained in Examples 1 to 11, a slight amount of hollow particles having two or more hollow portions or hollow particles not having a hollow portion were contained as impurities. However, in Examples 1 to 11, the percentage of the number of the particles having only one hollow portion was 90% or more.

Also, 3000 particles were randomly selected from the hollow particles obtained in Examples 1 to 11 and examined. As a result, in all of Examples 1 to 11, the percentage of the particles having a circularity of 0.85 or less was 10% by mass or less.

The shells of the hollow particles of Examples 1 to 11 and those of the hollow polymer particles, which were free of silica fine particles, of Comparative Examples 1 and 2 were equally good in surface smoothness and were equal in appearance. In the hollow particles of Examples 1 to 11, silica-derived fine particles were not observed in the outer surface of the shell or in the shell observed by breaking the particles. Also in the hollow particles obtained in Examples 1 to 11, from the elemental analysis by XRF and the ash content obtained by TG-DTA, it was confirmed that the shell contained the silica fine particles. From these results, in the hollow particles of Examples 1 to 11, it can be recognized that each of the silica fine particles in the shell was entirely embedded in the resin.

[Consideration]

The hollow polymer particles obtained in Comparative Examples 1 and 2 were high in CTE. The hollow silica particles obtained in Comparative Example 3 were low in compressive strength, that is, they were poor in pressure resistance, and they were high in relative permittivity and dielectric dissipation factor.

Meanwhile, the hollow particles obtained in Examples 1 to 11 had the shell of the organic-inorganic composite material, which contained the inorganic fine particles in an amount of 20% by mass or more and 90% by mass or less. Accordingly, the hollow particles obtained in Examples 1 to 11 were not too low in compressive strength, that is, they were good in pressure resistance; they were low in CTE, relative permittivity and dielectric dissipation factor; and as a filler for electronic material applications, they were excellent in balance between pressure resistance, dielectric property and CTE.

Examples 1 to 3 showed that in the hollow particles of the present disclosure, as the content of the inorganic fine particles increases, the CTE of the hollow particles decreases. Examples 1 to 3 also showed that as the content of the inorganic fine particles increases, the pressure resistance and the dielectric property tend to deteriorate. However, in the hollow particles of Examples 1 to 3 in each of which the content of the inorganic fine particles was from 20% by mass to 81% by mass, the pressure resistance and the dielectric property were kept good. In addition, from the results of Examples 1 to 3, even the hollow particles having an inorganic fine particles content of 90% by mass are presumed to have excellent pressure resistance and excellent dielectric property compared to hollow silica particles.

A comparison between Examples 1 to 3 and Example 4 showed that as the void ratio of the hollow particles increases, the dielectric property improves.

A comparison between Example 1 and Example 5 showed that the size of the inorganic fine particles has almost no influence on the CTE and dielectric property of the hollow particles. The better pressure resistance of the hollow particles of Example 5 than Example 1, is presumed to be because the shell thickness thereof was larger. A comparison between Example 1 and Examples 8 to 11 also showed that the size of the inorganic fine particles has almost no influence on the CTE and dielectric property of the hollow particles. The pressure resistance of the hollow particles of Examples 8 and 9 was inferior to that of Example 1. The reason for this is presumed that the hollow particles of Examples 8 and 9 had a relatively large ratio of the inorganic fine particle diameter to the shell thickness. The particularly excellent pressure resistance of the hollow particles of Example 10 is presumed to be because the particle diameter and the shell thickness were large, and the ratio of the inorganic fine particle diameter to the shell thickness was small.

A comparison between Examples 1 to 5 and Example 6 showed that when the content of the hydrocarbon monomer unit in the polymer is large, the dielectric property of the hollow particles tends to improve. The relatively high CTE of the hollow particles of Example 6 is presumed to be because, since the particle size of the droplets formed in the suspension step was large, the size of polymer precipitates precipitated during the shell formation in the polymerization step increased, and crosslinking of the precipitates was difficult to proceed.

A comparison between Example 1 and Example 7 showed that when the surface treatment agent of the inorganic fine particles contains a radically reactive functional group, the pressure resistance of the hollow particles tends to improve. This is estimated to be because, since the inorganic fine particles have the radically reactive functional group on the surface thereof, the inorganic fine particles are bound to the polymer via covalent bonds in the shell of the hollow particles, thereby increasing the shell strength.

Reference Signs List

1. Shell
2. Hollow portion
3. Resin
4. Inorganic fine particle
10. Holow particle
11. Aqueous medium

12. Low polarity material
20. Monomer composition droplet
20a. Hydrophobic solvent
20b. Material not containing hydrophobic solvent
30. Precursor particle

**Claims**

1.  Hollow particles comprising a shell and a hollow portion surrounded by the shell,

    wherein a void ratio is 50% or more;
    wherein a volume average particle diameter is 1.0 um or more and 50.0 um or less; and
    wherein the shell contains an organic-inorganic composite material containing a resin and inorganic fine particles, and a content of the inorganic fine particles in the shell is 20% by mass or more and 90% by mass or less.

2.  The hollow particles according to Claim 1, wherein a relative permittivity at a frequency of 1 GHz is 2.00 or less.

3.  The hollow particles according to Claim 1 or 2, wherein a thermal expansion coefficient at 23°C to 100°C is 10 ppm/°C or more and 50 ppm/°C or less.

4.  The hollow particles according to any one of Claims 1 to 3, wherein a relative permittivity of the inorganic fine particles at a frequency of 1 GHz is 5.0 or less, and a thermal expansion coefficient of the inorganic fine particles at 23°C to 100°C is -5.0 ppm/°C or more and 10 ppm/°C or less.

5.  The hollow particles according to any one of Claims 1 to 4, wherein the inorganic fine particles are silica fine particles.

6.  The hollow particles according to any one of Claims 1 to 5, wherein the inorganic fine particles are surface-treated with a surface treatment agent containing a radically reactive functional group.

7.  The hollow particles according to any one of Claims 1 to 6, wherein a ratio of a volume average primary particle diameter of the inorganic fine particles to a shell thickness is 0.90 or less.

8.  A method for producing the hollow particles defined by any one of Claims 1 to 7,
    the method comprising:

    preparing a mixture liquid containing a polymerizable monomer, inorganic fine particles, a hydrophobic solvent, a polymerization initiator, a dispersion stabilizer and an aqueous medium,
    suspending the mixture liquid to prepare a suspension in which droplets of a monomer composition containing the polymerizable monomer, the inorganic fine particles, the hydrophobic solvent and the polymerization initiator are dispersed in the aqueous medium,
    subjecting the suspension to a polymerization reaction to form precursor particles comprising a shell which contains a polymer of the polymerizable monomer and the inorganic fine particles and a hollow portion which is surrounded by the shell and including the hydrophobic solvent in the hollow portion, thereby obtaining a precursor composition in which the precursor particles are dispersed in the aqueous medium, and
    removing the included hydrophobic solvent from the precursor particles.

[FIG. 1]

[FIG. 2]

**INTERNATIONAL SEARCH REPORT**

| International application No. |
| --- |
| **PCT/JP2023/010816** |

| A. | CLASSIFICATION OF SUBJECT MATTER |
| --- | --- |

*C08F 2/44*(2006.01)i; *C08F 292/00*(2006.01)i; *C08K 3/013*(2018.01)i; *C08L 101/00*(2006.01)i
FI:  C08F2/44 A; C08F292/00; C08K3/013; C08L101/00

According to International Patent Classification (IPC) or to both national classification and IPC

| B. | FIELDS SEARCHED |
| --- | --- |

Minimum documentation searched (classification system followed by classification symbols)

C08F; C08K3/013; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2010-155909 A (PILOT CORP.) 15 July 2010 (2010-07-15) | 1, 5, 8 |
|  | claims, paragraphs [0019], [0031], [0034], example 1, fig. 2 | |
| Y | | 1-8 |
| Y | US 2010/0159231 A1 (SAMSUNG ELECTRONICS CO., LTD.) 24 June 2010 (2010-06-24) | 1-8 |
|  | claims | |
| Y | WO 2022/025123 A1 (SHOWA DENKO MATERIALS CO., LTD.) 03 February 2022 (2022-02-03) | 1-8 |
|  | claims, paragraphs [0030], [0031] | |
| Y | JP 2007-48615 A (SEKISUI CHEMICAL CO., LTD.) 22 February 2007 (2007-02-22) | 1-8 |
|  | claims, paragraphs [0045], [0087], [0088] | |
| Y | CN 103962074 A (INSTITUTE OF CHEMISTRY, CHINESE ACADEMY OF SCIENCES) 06 August 2014 (2014-08-06) | 1-8 |
|  | claims, paragraph [0003] | |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2023** | **20 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 501 973 A1

**INTERNATIONAL SEARCH REPORT**

International application No.

**PCT/JP2023/010816**

| C. DOCUMENTS CONSIDERED TO BE RELEVANT | | |
|---|---|---|
| Category* | Citation of document, with indication, where appropriate, of the relevant passages | Relevant to claim No. |
| X | JP 2021-191639 A (LG CHEM, LTD.) 16 December 2021 (2021-12-16) claims, paragraphs [0004], [0021] | 1-3, 5, 7 |
| Y | | 6, 8 |
| X | JP 10-158526 A (NEC CORPORATION) 16 June 1998 (1998-06-16) claims, paragraph [0001] | 1-4, 7 |
| Y | | 8 |
| X | WO 2019/189692 A1 (JGC CATALYSTS & CHEMICALS LTD.) 03 October 2019 (2019-10-03) claims, paragraph [0022] | 1, 5, 7 |
| Y | | 6 |
| X | JP 2012-7056 A (PILOT CORP.) 12 January 2012 (2012-01-12) particularly, claims, paragraphs [0015], [0025], [0042], example 1 | 1, 5, 7, 8 |
| Y | | 2-4, 6, 8 |
| Y | JP 2004-87639 A (HITACHI, LTD.) 18 March 2004 (2004-03-18) paragraph [0016] | 2-4 |
| Y | JP 2008-31409 A (MATSUSHITA ELECTRIC WORKS, LTD.) 14 February 2008 (2008-02-14) claims, paragraph [0002] | 2-4 |
| Y | WO 2022/059625 A1 (PANASONIC INTELLECTUAL PROPERTY MANAGEMENT CO., LTD.) 24 March 2022 (2022-03-24) claims, paragraph [0141], examples | 6 |
| Y | JP 2021-134261 A (SUMITOMO BAKELITE CO., LTD.) 13 September 2021 (2021-09-13) claims, paragraph [0055], examples | 6 |
| A | WO 2020/066705 A1 (NIPPON ZEON CO., LTD.) 02 April 2020 (2020-04-02) entire text | 1-8 |

Form PCT/ISA/210 (second sheet) (January 2015)

36

INTERNATIONAL SEARCH REPORT
Information on patent family members

International application No.

**PCT/JP2023/010816**

| Patent document cited in search report | | | Publication date (day/month/year) | Patent family member(s) | | Publication date (day/month/year) |
|---|---|---|---|---|---|---|
| JP | 2010-155909 | A | 15 July 2010 | (Family: none) | | |
| US | 2010/0159231 | A1 | 24 June 2010 | KR 10-2010-0075383 | A | |
| WO | 2022/025123 | A1 | 03 February 2022 | TW 202206501 | A | |
| JP | 2007-48615 | A | 22 February 2007 | (Family: none) | | |
| CN | 103962074 | A | 06 August 2014 | (Family: none) | | |
| JP | 2021-191639 | A | 16 December 2021 | US 2019/0318857 A1 claims, paragraphs [0004], [0020], [0021] EP 3543287 A1 KR 10-2018-0057080 A CN 109715720 A | | |
| JP | 10-158526 | A | 16 June 1998 | US 2001/0011111 A1 claims, paragraphs [0002], [0003] | | |
| WO | 2019/189692 | A1 | 03 October 2019 | US 2021/0000705 A1 claims, paragraph [0024] EP 3778749 A1 CN 111801377 A KR 10-2020-0136888 A | | |
| JP | 2012-7056 | A | 12 January 2012 | (Family: none) | | |
| JP | 2004-87639 | A | 18 March 2004 | US 2004/0039127 A1 [0048][0049] KR 10-2004-0030271 A CN 1478824 A TW 200404816 A | | |
| JP | 2008-31409 | A | 14 February 2008 | (Family: none) | | |
| WO | 2022/059625 | A1 | 24 March 2022 | (Family: none) | | |
| JP | 2021-134261 | A | 13 September 2021 | (Family: none) | | |
| WO | 2020/066705 | A1 | 02 April 2020 | US 2022/0033628 A1 entire text EP 3858922 A1 CN 112739780 A KR 10-2021-0066817 A | | |

**REFERENCES CITED IN THE DESCRIPTION**

**Patent documents cited in the description**

- JP 2012136363 A
- WO 2021172294 A
- WO 2004067638 A
- JP 2017066351 A